Europäisches Patentamt

European Patent Office

Office européen des brevets

(11) Veröffentlichungsnummer : **0 402 377 B1**

(12) **EUROPÄISCHE PATENTSCHRIFT**

(45) Veröffentlichungstag der Patentschrift :
**19.08.92 Patentblatt 92/34**

(51) Int. Cl.$^5$ : **B23P 15/24, B44B 5/02, B30B 5/04**

(21) Anmeldenummer : **89902646.2**

(22) Anmeldetag : **22.02.89**

(86) Internationale Anmeldenummer :
**PCT/EP89/00176**

(87) Internationale Veröffentlichungsnummer :
**WO 90/09865 07.09.90 Gazette 90/21**

(54) **VERFAHREN ZUR HERSTELLUNG EINES MIT EINEM PRÄGEMUSTER VERSEHENEN METALLISCHEN ENDLOSBANDES.**

(43) Veröffentlichungstag der Anmeldung :
**19.12.90 Patentblatt 90/51**

(45) Bekanntmachung des Hinweises auf die
Patenterteilung :
**19.08.92 Patentblatt 92/34**

(84) Benannte Vertragsstaaten :
**AT BE CH DE FR GB IT LI LU NL SE**

(56) Entgegenhaltungen :
**EP-A- 0 031 613
EP-A- 0 113 813
DE-A- 1 427 686
DE-A- 2 708 580
DE-C- 3 120 351**

(73) Patentinhaber : **Standex International GmbH
Kölner Strasse 352 - 354
W-4150 Krefeld (DE)**

(72) Erfinder : **WERTHMANN, Wilfried
Wolferstrasse 28
W-4150 Krefeld-Fischeln (DE)**

(74) Vertreter : **Ackmann, Günther, Dr.-Ing.
Patentanwalt
Karl-Lehr-Strasse 7
W-4100 Duisburg 1 (DE)**

## Beschreibung

Die Erfindung betrifft ein Verfahren zur Herstellung eines mit einem Prägemuster versehenen metallischen Endlosbandes zur kontinuierlichen Produktion von Preßlaminaten.

Preßlaminate in der Art kunststoffbeschichteter Hartfaserplatten, Glasfaserplatten u. dgl., die im Möbelbau oder in der Raumausstattung Verwendung finden, werden mit einer in die Oberfläche eingeprägten Strukturierung versehen, deren Muster beliebig sein kann. Zu solchen Mustern gehören beispielsweise Feinstrukturierungen oder Riffelungen, Noppen, aber auch eine Strukturierung in der Art einer Holzmaserung. Das Einprägen der Strukturierung geschieht mit Hilfe von Prägewerkzeugen. Bei einer bekannten Prägeeinrichtung nach der EP-A-31 613 werden die Preßlaminate kontinuierlich zwischen zwei Endlosbändern gepreßt. Dabei wird ein Vorprodukt zwischen zwei in entgegengesetzten Drehrichtungen umlaufenden Endlosbändern gepreßt. Bei diesem Verfahren ist das die Oberfläche des Preßlaminats beaufschlagende Endlosband mit einer Prägestrukturierung versehen. Hierfür wird auf ein aus rostfreiem Stahl bestehendes endloses Trägerband eine Metallschicht aufgalvanisiert und in die Metallschicht ein Prägemuster eingeätzt. Allein die Herstellung des Endlosbandes durch ein genaues Verschweißen der Enden eines Stahlbandes, das Schleifen der Schweißnaht und das Aufgalvanisieren einer Schicht aus einem Nichteisenmetall, in welches das Prägemuster eingeätzt wird, ist sehr aufwendig. Endlosbänder dieser Art können einen Umfang bis zu 30 m haben. Bei der Herstellung des Prägemusters wird auf die zuvor geschliffene und polierte Metallschicht eine Ätzreserve aufgetragen. Hierfür sind verschiedene Methoden geeignet, beispielsweise durch Aufdrucken mit Hilfe von entsprechend gemusterten Rollen, Druckwalzen (Siebdruckwalzen, Offsetdruckwalzen) oder durch Anwendung des fotografischen Reproduktionsverfahrens, bei dem eine fotosensible Schicht aufgetragen, diese über ein das Muster darstellendes Negativ belichtet und die nach dem Entwickeln auf der Oberfläche verbleibenden und dem Muster entsprechenden Flächenteile der Fotoschicht die Ätzreserve bilden. Diese aus dem Auftrag der Ätzreserve und dem Ätzvorgang bestehende Arbeitsweise kann auch mit gleichen oder anderen Mustervorlagen wiederholt werden, so daß auf dem Endlosband eine Musterung in sich durch verschiedene Ätztiefen entsteht. Wegen einer begrenzten Lebensdauer des Endlosbandes und im Falle einer Beschädigung ist die Anfertigung oder Nachfertigung mehrerer mit dem völlig gleichen Prägemuster versehenen Endlosbänder notwendig. Zur Herstellung mehrerer identischer Endlosbänder mußte bisher für jedes einzelne Endlosband die beschriebene Ätzmethode angewendet werden. Das aus mehreren Schritten bestehende Herstellungsverfahren ist aber sehr aufwendig und kostspielig.

Demgegenüber liegt der Erfindung die Aufgabe zugrunde, ein Verfahren zu entwickeln, mit dem auf wesentlich einfachere und billigere Art und Weise ein oder mehrere Endlosbänder mit einem völlig übereinstimmenden Prägemuster hergestellt werden können.

Diese Aufgabe wird erfindungsgemäß dadurch gelöst, daß von der mit dem Prägemuster versehenen Fläche eines ersten Endlosbandes ein Abguß in Form eines endlosen elastischen Kunststoffbandes und durch Aufgalvanisieren einer Metallschicht auf die Abdruckfläche des Kunststoffbandes ein die Arbeitskopie bildendes endloses Galvanoband hergestellt und das Kunststoffband entfernt wird.

Erfindungsgemäß können von einem einzigen, nach der herkömmlichen Methode hergestellten und mit einem Prägemuster vesehenen Endlosband beliebig viele Arbeitskopien geschaffen werden. Das nach der herkömmlichen Methode hergestellte und mit einem Prägemuster versehene Endlosband bildet eine Mutterform, von der die für die kontinuierliche Produktion von Preßlaminaten bestimmten Endlosbänder kopiert werden. Dieses Kopierverfahren für die großformatigen Endlosbänder ist wesentlich einfacher und schneller und damit auch erheblich billiger als das herkömmliche Ätzverfahren. Die Arbeitskopien benötigen kein Trägerband aus rostfreiem Stahl, so daß die aufwendige Herstellung eines Endlosbandes aus einem Stahlband durch Verschweißen und Schleifen der Schweißnaht entfällt. Vielmehr ist das Galvanoband ausreichend fest, um den mechanischen Beanspruchungen in der Prägeeinrichtung zu widerstehen. Die Herstellung eines Abgusses in Form eines endlosen elastischen Kunststoffbandes ist sehr einfach und preiswert. Der Abguß nimmt das mehrstufige Prägemuster bis in die feinsten Einzelheiten auf, so daß auch die auf das Kunststoffband aufgalvanisierte Metallschicht das Prägemuster entsprechend genau wiedergibt. Auf das durch Abguß hergestellte Kunststoffband kann nach dem Abziehen vom Galvanoband mhrfach wiederholend eine Metallschicht aufgalvanisiert werden, wobei dann das Kunststoffband mit dem Prägemuster gewissermaßen die Mutterform darstellt. Ein solches Negativ-Kunststoffband läßt sich auch wesentlich einfacher aufbewahren als ein mit dem Prägemuster versehenes endloses Stahlband.

Zur Herstellung des Kunststoffbandes wird vorzugsweise auf die dem Prägemuster zugehörige Fläche des Endlosbandes eine Polyurethanmasse aufgetragen, die zu dem elastischen Kunststoffband polymerisiert. Mit der Polyurethanmasse läßt sich ein genauer Abguß herstellen, und deren elastische Eigenschaft erlaubt, daß das Kunststoffband von dem als Mutterform dienenden Endlosband und von dem Galvanoband leicht abgezogen werden kann. Anstelle von Polyurethanmasse kann auch eine andere geeignete Kunststoffmasse, z.B.

Polyvinylchlorid, Silikonkautschuk o. dgl. verwendet werden. Um das endlose Kunststoffband, welches entsprechend dem als Mutterform dienenden Endlosband einen Umfang bis zu 30 m und eine Breite bis etwa 2,5 m haben kann, eine erhöhte mechanische Festigkeit zu geben, können in das Kunststoffband Verstärkungsfäden oder ein Verstärkungsnetz eingebettet werden.

Vor der elektrolytischen Metallabscheidung muß das elektrisch nichtleitende Kunststoffband auf der Abdruckfläche mir einer elektrisch leitenden Schicht versehen werden. Das kann beispielsweise durch Aufspritzen einer silberhaltigen Lösung und einer ein Reduktionsmittel enthaltenden Lösung geschehen. Das mit dem Silberniederschlag versehene Kunststoffband wird dann in einem galvanischen Bad behandelt, derart , daß sich auf der Abdruckfläche eine Metallschicht von etwa 1 bis 3 mm aus einem NE-Metall, z.B. Kupfer, Nickel oder Messing abscheidet.

Nachdem von dem durch elektrolytische Metallabscheidung hergestellten Galvanoband das elastische Kunststoffband abgezogen worden ist, wird es auf der Prägefläche elektrolytisch oder mechanisch poliert. Die Innenflächen, die auf den Walzen der Preßmaschine laufen, werden geschliffen.

Das als Mutterform dienende Endlosband ist vorzugsweise mit einem negativen Prägemuster versehen, das ein Negativ der in die Oberfläche des Preßlaminats einzuprägenden Strukturierung darstellt. In diesem Fall erhält das Kunststoffband auf seiner Innenfläche einen positiven Abguß des Prägemusters und die auf diese Innenschicht des Kunststoffbandes galvanisch aufgetragene Metallschicht, also das Galvanoband bilden mit ihrer Außenfläche wieder ein negatives Prägemuster, so daß das Galvanoband in dieser Lage in die Endlospreßmaschine eingesetzt und benutzt werden kann. Ist hingegen das als Mutterform dienende metallische Endlosband mit einem positiven Prägemuster versehen, das also mit der in die Oberfläche des Preßlaminats einzuprägenden Strukturierung identisch ist, so ist das Galvanoband nach dem Abziehen des Kunststoffbandes umzukrempeln. Das Kunststoffband hat einen negativen Abguß erhalten und entsprechend bildet die Außenfläche des damit hergestellten Galvanobandes ein positives Prägemuster. Doch ist auf der Innenfläche des Galvanobandes bei einer hinreichend dünnen Galvanoschicht ein negatives Prägemuster vorhanden, das durch Umkrempeln des Galvanobandes nach außen gekehrt wird. Da das Galvanoband eine Länge von etwa 5 bis 30 m hat, läßt es sich ohne Schwierigkeiten umkrempeln. Die nach dem Umkrempeln nach außen weisende Fläche zeigt ein negatives Prägemuster, so daß das Galvanoband nunmehr die gebrauchsfertige Lage hat.

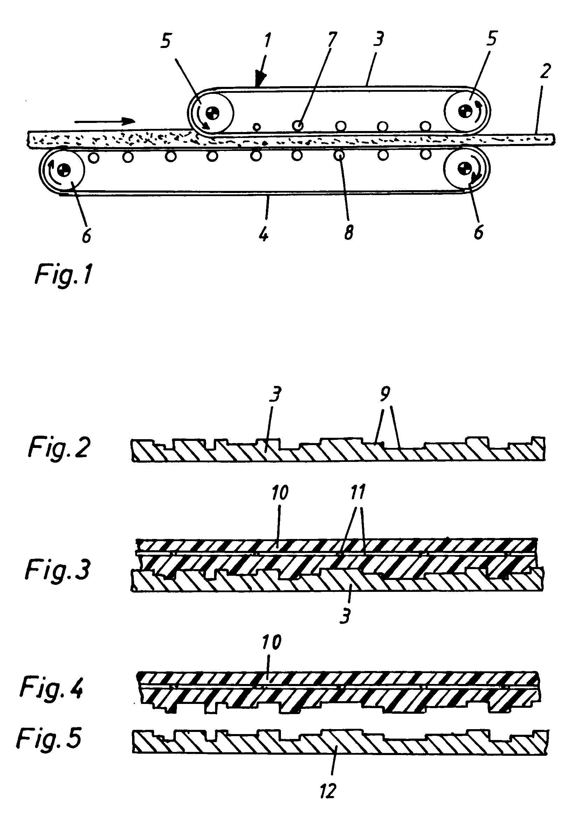

In Fig. 1 ist schematisch eine Preßeinrichtung 1 zur kontinuierlichen Produktion von Preßlaminaten 2 dargestellt. Sie besteht im wesentlichen aus zwei motorisch synchron angetriebenen Endlosbändern 3,4, die über jeweils zwei Walzen 5 bzw. 6 laufen und mit Stützwalzen 7 bzw. 8 versehen sind. Das am freien Ende des unteren Endlosbandes 4 zugeführte Vorprodukt, z.B. mit einem Kunststoff getränkte Fasern aus Holz, Glas o. dgl., auf das auch eine für eine harte Schutzschicht bestimmte Kunststoffmasse aufgerakelt sein kann, wird zwischen den beiden in entgegengesetzten Drehrichtungen umlaufenden Endlosbändern zu einem Preßlaminat 2 gepreßt. Das obere Endlosband 3 ist mit einem Prägemuster versehen, welches bei der Fertigung und Oberflächenbehandlung in die Oberfläche des Preßlaminats 2 eingeprägt wird.

Das in der Preßeinrichtung 1 verwendete, austauschbare Endlosband 3 wird durch Kopieren einer Mutterform auf folgende Art und Weise hergestellt:

Zunächst wird ein Endlosband 3 nach dem aus der EP-B1-31 613 bekannten Verfahren hergestellt. Hierfür wird ein Endlosband 3 aus einem schweißbaren und galvanisierbaren Metallblech, z.B. rostfreiem Stahl durch Verschweißen eines Stahlbandes hergestellt, auf das eine Metallschicht aufgalvanisiert wird. Die Metallschicht besteht aus einem für das Galvanisieren und die Anbringung einer Ätzgravur geeigneten Metall, z.B. Messing. Nachdem die aufgalvanisierte Metallschicht geschliffen und poliert ist, wird ein Prägemuster eingearbeitet. Besonders geeignet hierfür ist das Ätzverfahren. Beispielsweise wird mittels einer Druckwalze, die ihrerseits anhand einer Kopiervorlage mit einem Prägemuster versehen ist, Ätzreserve auf die Oberfläche des Endlosbandes aufgedruckt. Das geschieht durch einfaches Abrollen des Endlosbandes an der Druckwalze oder umgekehrt. Das mit der Ätzreserve in dem vorgesehenen Muster bedruckte Endlosband wird dann mittels einer Ätzlösung behandelt, wobei die nicht mit der Ätzreserve bedeckten Flächenbereiche der Metallschicht angeätzt werden und dort entsprechende, die Gravur bildende Vertiefungen entstehen. Nach der Ätzbehandlung und Entfernung der Ätzreserve kann die "gravierte" Oberfläche ein oder mehreren weiteren Behandlungen dieser Art unterworfen werden, wobei z.B. Ätzreserveaufträge in anderen Mustern, oder in gleichen, jedoch versetzten Mustern aufgedruckt werden. Es entstehen hierdurch mehrstufige Ätzfiguren, wobei z.B. in die Fläche einer ersten Vertiefung weitere Vertiefungen eingeätzt werden können. Nach Fertigstellung der Ätzgravur wird die Oberfläche des Endlosbandes in üblicher Weise verchromt. Damit ist das mit dem gewünschten Prägemuster versehene Endlosband 3 fertig.

In der Regel werden Preßlaminate eines Prägemusters in Großserie gefertigt, so daß abgenutzte oder beschädigte Endlosbänder 3 durch neue Endlosbänder 3 mit genau dem gleichen Prägemuster ersetzt werden müssen. Erfindungsgemäß dient das nach der vorstehend beschriebenen Methode gefertige Endlosband 3 als Mutterform zur Herstellung von Arbeitskopien, die in der Preßeinrichtung 1 zur Anwendung kommen.

Zur Herstellung einer Arbeitskopie wird auf das mit dem Prägemuster 9 versehene Endlosband 3, das in Fig. 2 schematisch dargestellt ist, eine Polyurethanmasse aufgetragen, wobei in die Beschichtung ein Verstärkungsnetz 11 oder Verstärkungsfäden eingebettet werden (vgl. Fig. 3). Bedarfsweise kann vor dem Auftragen der Kunststoffmasse ein Trennmittel, z.B. eine Silikonflüssigkeit auf das Prägemuster gesprüht werden. Die etwa 3 bis 4 mm dicke Polyurethanmasse polymerisiert und bildet ein endloses elastisches Kunststoffband 10, das sich über den ganzen Umfang des Endlosbandes 3 erstreckt. Das elastische Kunststoffband 10 wird von dem Endlosband 3 abgezogen und bildet ein Zwischenprodukt mit einem Abdruck des Prägemusters.

Um auf das Kunststoffband 10, das aus einem elektrisch nichtleitenden Werkstoff besteht, eine Metallbeschichtung auf galvanischem Wege vornehmen zu können, wird auf der das Prägemuster wiedergebenden Fläche eine elektrisch leitende Schicht erzeugt. Hierfür kann die Lösung eines Silbersalzes und die Lösung eines Reduktionsmittels aufgesprüht werden, so daß sich ein dünner Silberüberzug bildet. Anschließend wird das derart auf einer Fläche leitend gemachte Kunststoffband in einem üblichen galvanischen Bad behandelt, daß ein NE-Metall, z.B. Kupfer, Nickel oder eine Legierung, z.B. Messing enthält. Es scheidet sich auf der elektrisch leitend gemachten Fläche des Kunststoffbandes 10 eine Metallschicht ab, deren Dicke in Abhängigkeit von den Bandabmessungen und anderen Eigenschaften etwa 0,5 bis 3 mm beträgt. Diese Metallschicht bildet ein Galvanoband 12, von dem das Kunststoffband 10 abgezogen wird.

Das Galvanoband wird anschließend auf der Rückseite geschliffen und kann bedarfsweise mit einem kunststoffbeschichteten Textilgewebe oder einer kunststoffbeschichteten Folie hinterfüttert werden. Die das Prägemuster darstellende Fläche wird elektrolytisch oder mechanisch geschliffen und mit einem Chromüberzug versehen. Nach diesem Finish ist das Galvanoband 12 fertig und kann als Arbeitskopie in einer Prägeeinrichtung zum Einsatz kommen. Das abgezogene Kunststoffband 10 kann zur Herstellung eines weiteren Galvanobandes 12 verwendet werden.

## Patentansprüche

1. Verfahren zur Herstellung eines mit einem mehrstufigen Prägemuster (9) versehenen metallischen Endlosbandes (3) zur kontinuierlichen Produktion von Preßlaminaten, dadurch gekennzeichnet, daß von der mit dem Prägemuster versehenen Fläche eines ersten Endlosbandes (3) ein Abguß in Form eines endlosen elastischen Kunststoffbandes (10) und durch Aufgalvanisieren einer Metallschicht auf die Abdruckfläche des Kunststoffbandes (10) ein die Arbeitskopie bildendes endloses Galvanoband (12) hergestellt und das Kunststoffband (10) entfernt wird.

2. Verfahren nach Anspruch 1, dadurch gekennzeichnet, daß auf die mit dem Prägemuster versehene Fläche des Endlosbandes (3) eine Polyurethanmasse aufgetragen wird, die zu einem elastischen Kunststoffband (10) polymerisiert.

3. Verfahren nach Anspruch 1 oder 2, dadurch gekennzeichnet, daß in das Kunststoffband (10) Verstärkungsfäden oder ein Verstärkungsnetz (11) eingebettet wird.

4. Verfahren nach einem der Ansprüche 1 bis 3, dadurch gekennzeichnet, daß die Abdruckfläche des Kunststoffbandes (10) mit einer elektrisch leitenden Schicht versehen und in einem galvanischen Bad behandelt wird.

5. Verfahren nach einem der Ansprüche 1 bis 4, dadurch gekennzeichnet, daß das Galvanoband (12) auf der Innenfläche geschliffen und das Prägemuster elektrolytisch oder mechanisch poliert wird.

6. Verfahren nach einem der Ansprüche 1 bis 5, dadurch gekennzeichnet, daß das als Mutterform dienende metallische Endlosband (3) mit einem negativen Prägemuster versehen ist.

7. Verfahren nach einem der Ansprüche 1 bis 5, dadurch gekennzeichnet, daß das als Mutterform dienende metallische Endlosband (3) mit einem positiven Prägemuster versehen ist und das Galvanoband (12) nach dem Entfernen des Kunststoffbandes (10) umgekrempelt wird.

## Revendications

1. Procédé de fabrication d'une bande métallique (3) sans fin, munie d'un motif gaufré (9) polyétagé et destinée à la production en continu d'agglomérés stratifiés obtenus par compression, caractérisé en ce qu'il consiste à fabriquer, à partir de la face, munie du motif gaufré, d'une première bande (3) sans fin, un moulage sous la forme d'une bande de matière plastique (10) élastique et sans fin, et à fabriquer, en déposant par électrolyse une couche métallique sur la face de reproduction de la bande en matière plastique (10), une bande (12) obtenue par dépôt par électrolyse, sans fin et formant la copie de travail, et à enlever la bande en matière plastique (10).

2. Procédé suivant la revendication 1, caractérisé en ce qu'il consiste à déposer, sur la face de la bande (3) sans fin qui est munie du motif gaufré, une composition de polyuréthanne que l'on polymérise en une bande de matière plastique (10) élastique.

3. Procédé suivant la revendication 1 ou 2, caractérisé en ce qu'il consiste à incorporer à la bande de matière plastique (10) des fils de renforcement ou un filet de renforcement (11).

4. Procédé suivant l'une des revendications 1 à 3, caractérisé en ce qu'il consiste à munir la face de reproduction de la bande en matière plastique (10) d'une couche conductrice de l'électricité et à la traiter dans un bain d'électrolyse.

5. Procédé suivant l'une des revendications 1 à 4, caractérisé en ce qu'il consiste à poncer la face intérieure de la bande (12) obtenue par dépôt par électrolyse et à polir électrolytiquement ou mécaniquement le motif gaufré.

6. Procédé suivant l'une des revendications 1 à 5, caractérisé en ce qu'il consiste à munir la bande métallique (3) sans fin servant de modèle maître d'un motif gaufré négatif.

7. Procédé suivant l'une des revendications 1 à 5, caractérisé en ce qu'il consiste à munir la bande métallique (3) sans fin servant de modèle maître d'un motif gaufré positif et à retourner la bande (12), obtenue par dépôt par électrolyse, après l'enlèvement de la bande en matière plastique (10).

## Claims

1. A method of producing a metal endless belt (3) formed with a multi-level embossed pattern (9) for continuous production of pressed laminates, characterised in that a cast in the form of an endless resilient plastics belt (10) is taken of a surface of a first endless belt (3) formed with the embossed pattern and an endless electrodeposited belt (12) forming the working copy is produced by electrodepositing a metal layer on the copy surface of the plastics belt (10), which is then removed.

2. A method according to claim 1, characterised in that a polyurethane material which polymerises to form a resilient plastics belt (10) is applied to that surface of the endless belt (3) which is formed with the embossed pattern.

3. A method according to claim 1 or 2, characterised in that reinforcing fibres or a reinforcing net (11) is embedded in the plastics belt (10).

4. A method according to any of claims 1 to 3, characterised in that the copy surface of the plastics belt (10) is provided with an electrically conductive layer and treated in an electroplating bath.

5. A method according to any of claims 1 to 4, characterised in that the inner surface of the electrodeposited belt (12) is ground and the embossed pattern is electrolytically or mechanically polished.

6. A method according to any of claims 1 to 5, characterised in that a negative embossed pattern is formed on the endless metal belt (3) serving as a master pattern.

7. A method according to any of claims 1 to 5, characterised in that a positive embossed pattern is formed on the endless metal belt (3) serving as a master pattern, and the electrodeposited belt (12) is turned inside out after removing the plastics belt (10).

Fig.1

Fig.2

Fig.3

Fig.4

Fig.5